# FASCICULE DE BREVET EUROPEEN

(11) **EP 0 422 549 B1**
(45) Date de publication et mention de la délivrance du brevet: **02.04.1997**
(21) Numéro de dépôt: 90119244.3
(22) Date de dépôt: 08.10.1990
(51) Int. Cl.: H04L 12/56

(54) **Dispositif de régularisation de débit de circuits virtuels empruntant une voie de transmission à multiplexage temporel asynchrone**
Anordnung für Datenflusssteuerung von virtuellen Verbindungen, übertragen über einer asynchronen zeitmultiplexierten Übertragungsstrecke
Device controlling the through put of virtual circuits using an asynchronous TDM-transmission path

(30) Priorité: 12.10.1989 FR 8913341
(43) Date de publication de la demande: 17.04.1991
(73) Titulaire: ALCATEL CIT, 75008 Paris (FR)
(72) Inventeur: Le Bihan, Denis, F-22300 Lanmerin (FR)
(74) Mandataire: Weinmiller, Jürgen

(56) Documents cités:
- EP-A- 0 171 596
- IEEE JOURNAL ON SELECTED AREAS IN COMMUNICATIONS, vol. SAC-5, no. 8, octobre 1987, pages 1315-1326, IEEE, New York, US; M.G.H. KATEVENIS: "Fast switching and fair control of congested flow in broadband networks"
- IBM TECHNICAL DISCLOSURE BULLETIN, vol. 18, no. 6, novembre 1975, pages 1787- 1788, New York, US; S.W. FRIEDMAN et al.: "Queueing technique for bandwidth allocation in a packet switched network"

## Description

La présente invention concerne un dispositif de régularisation du débit de circuits virtuels empruntant une voie de transmission à multiplexage temporel asynchrone.

Une voie de transmission à multiplexage temporel asynchrone est une voie de transmission acheminant des messages de données dans des structures de données numériques appelées cellules. Chaque cellule comprend un en-tête constitué, par exemple, de quatre caractères à huit bits et un corps de message constitué d'une nombre défini de caractères, 32 par exemple. Sur la voie de transmission, de telles cellules se suivent sans interruption. S'il n'y a pas de message à transmettre, la voie de transmission achemine une cellule "vide", c'est-à-dire une cellule de même format qu'une cellule de message et comportant une information conventionnelle aisément reconnaissable. Des dispositions sont prises pour maintenir une proportion suffisante de telles cellules vides dans le flot des cellules de message ; elles servent en effet, notamment, à la synchronisation de l'extrémité de réception sur le format des cellules.

L'en-tête de chaque cellule de message contient sur deux caractères par exemple, une information définissant, à l'intention de l'extrémité de réception, la direction dans laquelle le corps de message devra être retransmis. Les deux autres caractères de l'entête contiennent des informations de service et, notamment, une information de contrôle de code et de détection d'erreur relative aux deux caractères de destination précédents. La même information se retrouve dans les en-têtes de cellules irrégulièrement espacées, qui ont la même destination. Elle identifie ainsi une sorte de circuit virtuel occupant une partie de la capacité de transmission de la voie de transmission. Plus généralement, ce circuit virtuel va occuper la voie de transmission en lui apportant un certain débit, mesuré par exemple en cellules par unité de temps, et ce débit est fluctuant. L'invention a plus précisément pour objet de régulariser ce débit, autant qu'il est possible.

La voie de transmission supporte à tout instant plusieurs circuits virtuels dont les cellules s'intercalent de manière irrégulière dans ce qui est couramment appelé un multiplexage temporel asynchrone. Les débits - fluctuants - des différents circuits virtuels sont différents. La somme de ces débits est limitée par le débit maximal de la voie de transmission. Elle fluctue aussi. Cela laisse la place à la transmission de cellules vides.

Par ailleurs, le nombre de circuits virtuels qui peuvent être séparément identifiés dépend du nombre de bits dévolus à cette information dans l'en-tête des cellules. Le nombre maximal de circuits virtuels est quant à lui déterminé, entre autres, par le nombre de circuits virtuels auquel on aboutit en divisant le débit maximal de la voie de transmission par le débit minimal d'une source de données pouvant emprunter un circuit virtuel. Il est très élevé et atteint par exemple 64 K.

Mais on destine la transmission à multiplexage temporel asynchrone aux plus larges domaines d'application et les débits à prévoir pour les sources pouvant emprunter un circuit virtuel s'étagent dans une vaste gamme de débits (par exemple de quelques kilobits à quelques centaines de mégabits par seconde). Le nombre de circuits virtuels actifs sera donc en général bien moindre que leur nombre maximal.

La définition qui précède de la transmission par multiplexage temporel asynchrone ne doit toutefois pas être limitée aux cas où les cellules sont toutes de la même longueur. L'emploi de cellules de longueurs différentes, toutes multiples d'une longueur de base est concevable et les adaptations qui en découlent, pour ce qui concerne la présente invention, sont à la portée de l'homme de métier.

Une voie de transmission à multiplexage temporel asynchrone est donc faite pour acheminer les données fournies par des sources aux débits très variés et fluctuant. En aval, des équipements de commutation et de transmission acheminent les messages contenus dans les cellules vers leurs destinations. Il convient donc, au niveau de la voie de transmission considérée, pour ne pas risquer d'engorgement en aval, de faire en sorte qu'aucune source, par fraude ou par suite d'une défaillance, n'apporte, même temporairement, un débit supérieur à celui qui lui est globalement attribué.

Une solution connue à ce problème est la répression. L'acheminement par la voie de transmission de toute cellule considérée comme excédentaire par rapport au débit globalement attribué au circuit virtuel est empêché, ou tout au moins la cellule excédentaire est marquée en tant que telle, pour qu'elle soit rejetée plus loin, en cas d'engorgement.

La présente invention propose une autre solution à ce problème, basée essentiellement sur une régularisation du débit.

L'invention a ainsi pour objet un dispositif de régularisation du débit de circuits virtuels empruntant une voie de transmission à multiplexage temporel asynchrone dans lequel les cellules entrantes d'une voie à multiplexage temporel asynchrone d'entrée, comportant une en-tête contenant une information de destination qui peut être traitée comme une identité de circuit virtuel, sont aiguillées vers une mémoire de cellules comprenant une pluralité de mémoires tampons de circuits virtuels, chaque cellule étant rangée dans la mémoire tampon de circuit virtuel associée au circuit virtuel auquel cette cellule appartient, et les cellules sortantes d'une voie à multiplexage temporel asynchrone de sortie sont lues dans ces mêmes mémoires tampons de circuits virtuels. Un tel dispositif est connu, par exemple du document IEEE JOURNAL ON SELECTED AREAS IN COMMUNICATIONS, vol. SAC-5, no. 8, octobre 1987, pages 1315-1326, IEEE, New York, US; M.G.H. KATEVENIS: "Fast switching and fair control of congested flow in broadband networks" ce dispositif de la présente invention se caractérise en ce qu'il comprend des moyens de commande recevant une identité de circuit virtuel extraite de chacune desdites cellules entrantes et associant entre elles les identités de circuit virtuel des cellules entrantes successives de manière à déterminer l'ordre dans lequel ces mêmes cellules sont ensuite lues dans lesdites mémoires tampon de circuits virtuels pour être retransmises en tant que cellules sortantes, ces moyens de commande adaptant ledit ordre en fonction d'informations propre à chaque circuit virtuel, de manière que des cellules entrantes successives d'un même circuit virtuel, issues d'une même mémoire tampon de circuit virtuel, soient espacées au moins d'un intervalle déterminé pour ce circuit virtuel, réduisant ainsi le débit instantané du circuit virtuel sans perte de cellule.

Le fait d'enregistrer les cellules entrantes dans des mémoires tampons de circuits virtuels permet au dispositif de commande de choisir les cellules à émettre dans ces mémoires tampons de manière que celles d'un même circuit virtuel respectent un intervalle déterminé qui est propre à ce circuit virtuel et le résultat visé est ainsi atteint.

Selon une autre caractéristique de l'invention, dans ce dispositif de régularisation de débit, des temps cellule, correspondant aux intervalles de temps successifs durant lesquels sont envoyées les cellules sortantes sur la voie de transmission à multiplexage temporel asynchrone de sortie, sont numérotés cycliquement et une file d'attente de temps cellule est affectée à chacun de tels temps cellule portant un numéro distinct, l'envoi de cellules consécutives d'un même circuit virtuel en respectant ledit intervalle déterminé étant obtenu en inscrivant une indication identifiant ce circuit virtuel dans des files d'attente de temps cellule espacés au moins dudit intervalle déterminé, tandis que, à chaque temps cellule identifié par son numéro , le contenu de la file d'attente du temps cellule correspondant à ce numéro est transféré dans une file d'attente d'émission, chaque indication de circuit virtuel de la file d'attente d'émission étant utilisée à son tour pour aller lire, dans la mémoire tampon du circuit virtuel auquel elle appartient, une cellule qui est transmise sur la voie de transmission à multiplexage temporel asynchrone de sortie.

Ainsi l'obtention d'un intervalle déterminé entre les cellules d'un même circuit virtuel résulte de l'affectation d'une cellule à émettre à un temps cellule qui suit celui auquel était affectée la cellule précédente avec un tel intervalle ; cette affectation consiste à inscrire le circuit virtuel dans une file d'attente associée au temps cellule désiré, les files d'attente des temps cellules successifs étant finalement chaînées dans une file d'attente émission unique. De telles dispositions permettent de résoudre les conflits que pourraient présenter des demandes de transmission de cellules dans un même temps cellule à venir.

Selon une autre caractéristique de l'invention, à l'émission d'une cellule sortante, et si la mémoire tampon du circuit virtuel auquel elle appartient en contient au moins une autre, l'indication identifiant ce circuit virtuel est inscrite dans une file d'attente de temps cellule qui est sélectionnée, à partir du temps cellule en cours, ou à partir du temps cellule auquel avait été affectée la cellule sortante émise dont l'identité avait été mémorisée à cet effet, en tenant compte d'une indication de vitesse attachée au circuit virtuel auquel appartient ladite cellule sortante.

Selon une autre caractéristique de l'invention, à l'émission d'une cellule sortante, et si la mémoire tampon du circuit virtuel auquel elle appartient en contient au moins une autre, l'indication identifiant ce circuit virtuel est inscrite dans une file d'attente de temps cellule qui est sélectionnée, à partir du temps cellule en cours, ou à partir du temps cellule auquel avait été précédemment affectée la cellule sortante émise, dont l'identité avait été mémorisée à cet effet, en tenant compte d'une indication de vitesse attachée au circuit virtuel auquel appartient ladite cellule sortante et d'une donnée dépendant du débit observé de ce circuit virtuel.

Selon une autre caractéristique de l'invention, à la réception d'une cellule entrante et si la mémoire tampon du circuit virtuel auquel appartient cette cellule entrante n'en contient aucune autre, l'indication identifiant ce circuit virtuel est inscrite dans une file d'attente de temps cellule qui est déterminée à partir du temps cellule en cours.

Selon une autre caractéristique de l'invention, à la réception d'une cellule entrante et si la mémoire tampon du circuit virtuel auquel appartient cette cellule entrante n'en contient aucune autre, l'indication identifiant ce circuit virtuel est inscrite dans une file d'attente de temps cellule qui est déterminée à partir du temps cellule en cours et d'une indication de vitesse attachée au circuit virtuel considéré.

Selon une autre caractéristique de l'invention, ladite donnée dépendant du débit est une mesure du remplissage de la mémoire tampon du circuit virtuel de la cellule considérée.

Selon une autre caractéristique de l'invention, pour un degré de remplissage au moins de la mémoire tampon d'un circuti virtuel, il est prévu une indication de comptage qui est incrémentée à l'émission de chaque cellule appartenant à ce circuit virtuel, lorsque ledit degré d'occupation est dépassé, et décrémenté, s'il n'est pas atteint, ladite indication de comptage ayant une valeur maximale, atteinte en cas de dépassements majoritaires dudit degré d'occupation, qui cause alors la mise en oeuvre d'une indication de vitesse correspondant à une espacement plus grand des cellules de ce circuit virtuel en sortie du dispositif de régularisation de débit.

Les différents objets et caractéristiques de l'invention apparaîtront de façon plus détaillée dans la description qui va suivre, donnée à titre d'exemple non limitatif, en se reportant aux figures annexées qui représentent :
- la figure 1, le diagramme par blocs d'un exemple de réalisation du dispositif de régularisation de débit de la présente invention,
- la figure 2, un mode de réalisation du dispositif de commande MC de la figure 1.

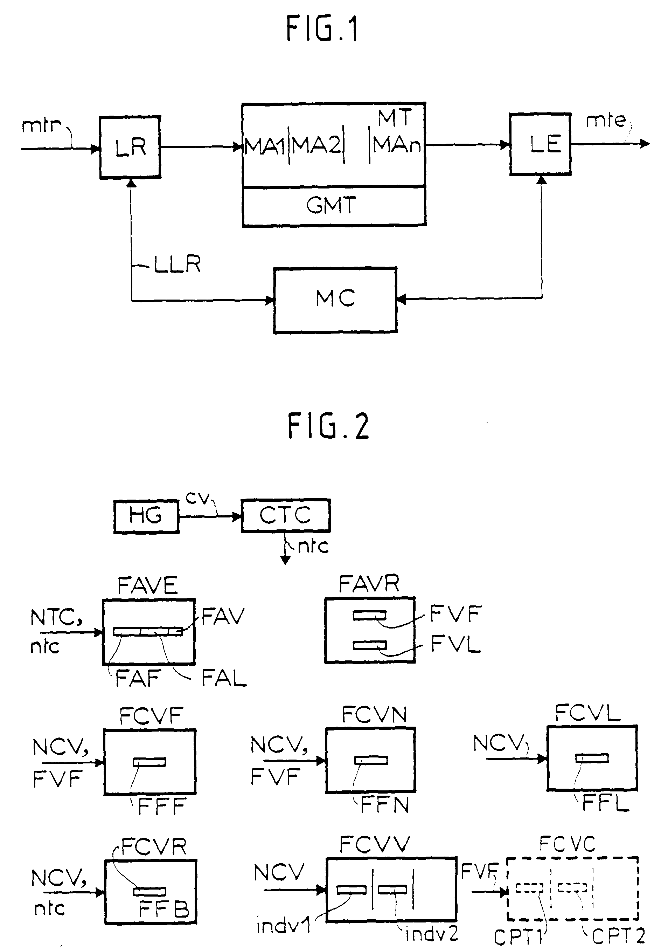

On décrira d'abord en se reportant à la figure 1 le diagramme général d'un mode de réalisation de la présente invention.

Une voie multiplex temporelle asynchrone d'entrée mtr est couplée à une logique de réception LR. Cette voie multiplex est par exemple du type évoqué dans le préambule. Elle fournit des cellules entrantes successives comportant une en-tête contenant un numéro de circuit virtuel.

Une voie multiplex temporelle asynchrone de sortie mte est couplée à une logique d'envoi LE. Cette voie est du même type que la voie d'entrée mtr. La logique d'envoi LE lui fournit des cellules sortantes successives qui comprennent normalement toutes les cellules entrantes.

La logique de réception LR est couplée à une mémoire de cellules MT qui contient une mémoire tampon pour chaque circuit virtuel MA1, MA2..., MAn. Un dispositif de gestion de mémoire GMT est associé à la mémoire de cellules MT. Plus précisément, dans la mémoire de cellules MT, le dispositif de gestion de mémoire GMT affecte à chaque circuit virtuel en activité des voies mtr, mte une mémoire tampon de dimensions suffisante pour les besoins qui apparaîtront ci-après. Tout se passe alors comme si chaque circuit virtuel possible possédait en propre une mémoire tampon dans la mémoire de cellules MT. De telles dispositions sont connues en elles-mêmes.

La principale fonction de la logique de réception LR est de ranger les cellules entrantes reçues de la voie d'entrée mtr dans les mémoires tampon respectives. A cet effet elle prend connaissance du numéro de circuit virtuel inclus dans une cellule entrante, identifie la mémoire tampon qui lui est affectée, en relation avec le dispositif de gestion de mémoire GMT, et détermine l'adresse, dans la mémoire tampon de ce circuit virtuel, où il convient d'enregistrer la cellule entrante.

La logique d'envoi LE lit les cellules à envoyer dans les files d'attente MA1, MA2..., MAn dans la mémoire MT. Son rôle principal est ainsi de déterminer l'ordre dans lequel les cellules reçues et enregistrées dans les mémoire tampon doivent être retransmises, afin que les cellules appartenant à un même circuit virtuel soient convenablement espacées les unes des autres sur la voie de sortie mte.

Globalement, la voie entrante mtr, qui est du type évoqué au début de ce texte, fournit un flux de cellules qui sont temporairement enregistrées dans la mémoire de cellules MT, avant d'être retransmises sur la voie sortante mte. Le débit global entrant et le débit global sortant sont égaux. Lorsque les espacements entre les cellules des circuits virtuels sont satisfaisants, les cellules reçues dans un certain ordre sur la voie entrante mtr et enregistrées dans la mémoire de cellules MT sont retransmises dans le même ordre sur la voie sortante mte, et le dispositif décrit ne joue pratiquement aucun rôle.

Toutefois, comme examiné au début de ce texte, il advient que les cellules entrantes ne respectent pas l'espacement prescrit. Le dispositif de l'invention comprend donc des moyens, dans la logique de réception LR, dans la logique d'émission LE et dans un dispositif de commande MC, pour imposer le respect d'un certain espacement entre les cellules de chacun des circuits virtuels, sur la voie sortante mte.

D'une manière générale, cela est obtenu simplement par l'emploi d'un dispositif de commande MC comprenant une file d'attente d'émission, de type FIFO (premier entré - premier sorti), dans laquelle la logique de réception LR inscrit les adresses d'enregistrement des cellules entrantes, les unes après les autres, et dans laquelle la logique d'émission LE prend les adresses d'enregistrement successives des cellules à émettre. On peut faire en sorte que l'émission suive ainsi la réception avec un retard d'un certain nombre de cellules. Tant que les espacements des cellules entrantes sont satisfaisants, l'émission reprend les cellules entrantes, dans l'ordre où elles sont arrivées. Si les espacements entre cellules d'un même circuit virtuel deviennent inférieurs à une certaine valeur, on retarde l'entrée dans la file d'attente d'émission des addresses d'enregistrement, de manière à impose l'espacement désiré.

L'invention propose ainsi une forme de réalisation du dispositif de commande MC qui est généralement illustré par la figure 2. Il comprend essentiellement une horloge HG, un compteur de cellules CTC et des zones de mémoires.

L'horloge HG est une base de temps qui est synchronisée sur les signaux reçus de la voie multiplex entrante mtr et qui fournit entre autres un signal CV identifiant le début d'un intervalle de temps répétitif dit temps cellule dont la durée est celle de la réception, ou de l'émission, d'une cellule.

Le compteur de temps cellule CTC est un compteur cyclique à N positions (N entier et de préférence égal à une puissance de 2) qui fournit, à chaque temps cellule, un numéro de temps cellule ntc prenant successivement les différentes valeurs de O à N-1.

Par ailleurs, le dispositif MC de la figure 2 reçoit de la logique de réception LR l'identité NCV du circuit virtuel auquel appartient la cellule reçue .

Les zones de mémoire du dispositif MC comprennent :
- une table de files d'attente de temps cellule FAVE comprenant N emplacements, un par numéro de temps cellule, contenant l'identité FAF d'un premier circuit virtuel ayant une cellule à émettre, l'identité FAL d'un dernier circuit virtuel ayant une cellule à émettre, ainsi qu'un bit FAV servant à marquer une file d'attente vide,
- une table d'émission FAVR comprenant l'identité FVF d'un premier circuit virtuel ayant une cellule à émettre et l'identité FVL d'un dernier circuit virtuel ayant une cellule à émettre,
- une table de début de tampon de circuit virtuel FCVF comprenant un emplacement par circuit virtuel, chacun d'eux contenant l'adresse FFF d'un emplacement de la mémoire tampon de ce circuit virtuel, où est enregistrée une première cellule à émettre de ce circuit virtuel,
- une table de fin de tampon de circuit virtuel FCVL comprenant un emplacement par circuit virtuel, chacun d'eux contenant l'adresse FFL d'un emplacement de la mémoire tampon de ce circuit virtuel, où est enregistrée une dernière cellule à émettre de ce circuit virtuel,
- une table d'occupation de mémoire tampon de circuit virtuel FCVR comprenant un emplacement de mémoire par circuit virtuel, chacun d'eux contenant un compte FFB du nombre de cellules de ce circuit virtuel enregistrées dans la mémoire tampon de ce circuit virtuel,
- une table de vitesses FCVV comprenant un emplacement de mémoire par circuit virtuel, chacun d'eux contenant au moins deux indications de vitesse indv1 et indv2 à utiliser en relation avec ce circuit virtuel comme on le verra par la suite,
- une table de chaînage FCVN comprenant un emplacement de mémoire par circuit virtuel, chacun d'eux contenant l'identité FFN d'un autre circuit virtuel avec lequel le circuit virtuel considéré est chaîné.

Lorsqu'une cellule est reçue sur la voie entrante mtr, la logique de réception LR, en relation avec le dispositif de gestion de mémoire GMT, s'adresse au dispositf MC par une jonction LLR, en fournissant, entre autres, l'identité NCV du circuit virtuel auquel appartient la cellule, dérivée de l'en-tête de la cellule. En réponse, le dispositif MC lit la table FCVL et obtient l'adresse FFL dans la mémoire de cellules MT (dans la mémoire tampon affectée au circuit virtuel par le dispositif de gestion de mémoire GMT) de l'emplacement de mémoire où a été enregistrée la dernière cellule reçue de ce circuit virtuel. Après incrémentation (modulo l'extension de la mémoire tampon du circuit virtuel, à l'aide du dispositif GMT, consulté par la liaison LLG), cela fournit l'adresse où doit être enregistrée, dans la mémoire de cellules MT, la cellule incidente. Cette adresse incrémentée, notée FFL+1, est par ailleurs enregistrée dans la table FCVL, dans l'emplacement qui vient d'être lu.

En outre, le dispositif MC lit la table FCVR, selon l'identité de circuit virtuel NCV, et obtient le nombre FFB de cellules du circuit virtuel déjà enregistrées dans la mémoire de cellules MT. Ce nombre est également incrémenté, avant d'être réinscrit dans le même emplacement.

De plus, le nombre FFB est testé, avant d'être incrémenté, par exemple. S'il est différent de zéro, aucune action spécifique n'est nécessaire. La logique de réception LR se borne à enregistrer la cellule entrante dans la mémoire de cellules MT, à l'adresse FFL+1, comme indiqué précédemment. S'il est égal à zéro, d'une part, la cellule enregistrée dans la mémoire tampon du circuit virtuel y est donc, non seulement la dernière, mais aussi la première cellule. Par conséquent, la table de début de tampon de circuit virtuel FCVF est lue, à l'adresse NCV, tout comme la table FCVL, et l'adresse FFL+1 y est inscrite comme nouvelle adresse FFF.

Toujours dans le cas où le nombre FFB est égal à zéro, la cellule reçue doit, d'autre part, être affectée à un temps cellule, en vue de sa retransmission. Pour cela, le dispositif MC inscrit l'identité de circuit virtuel NCV dans la table de files d'attente FAVE. Plus précisément, le dispositif MC adresse la table FAVE avec une indication d'adresse NTC qui est dérivée du numéro de temps cellule courant, fourni par le compteur CTC, par exemple par addition d'une unité au moins. A l'emplacement désigné par cette indication d'adresse NTC, dans la table FAVE, le dispositif MC lit les identités FAF du premier circuit virtuel ayant une cellule à émettre et celle , FAL, du dernier circuit virtuel ayant une cellule à émettre, qui sont associés à ce temps cellule, ainsi que le bit FAV. Le dispositif MC enregistre, comme nouvelle identité FAL, le numéro NCV du circuit virtuel considéré. De plus, l'identité FAL est utilisée pour adresser la table FCVN et y inscrire l'identité NCV comme indication de chaînage FFN. Toutefois, si le bit FAV indique que la file d'attente était vide, cette dernière opération est omise et l'identité NCV est inscrite comme identité FAF, dans la table FAVE, à l'adresse NTC, tandis que le bit FAV y est changé d'état pour indiquer maintenant que la file d'attente n'est pas vide.

Ainsi, le numéro du circuit virtuel considéré est chaîné dans une file d'attente associée au prochain temps cellule, dont le début est l'identité FAF et la fin l'identité FAL, le chaînage étant matérialisé par l'inscription de numéros de circuits virtuels dans la table FCVN ; ce procédé est classique.

Selon une variante, au lieu de chaîner le numéro du circuit virtuel dans le prochain temps cellule, la table FCVV est également lue et fournit, provenant d'un emplacement appartenant au circuit virtuel considéré, lu en réponse au numéro de circuit virtuel NCV, une indication de vitesse indv1, laquelle est ajoutée au numéro de temps cellule courant ntc. La somme ntc+indv1 fournit alors l'adresse NTC. L'indication de vitesse indv1, qui peut être en fait une valeur d'espacement entre cellules à appliquer lorsque la mémoire tampon du circuit virtuel est quasi-vide, sert alors à maintenir dans la mémoire tampon une première cellule reçue du circuit virtuel, pour provoquer la mise en oeuvre du processus d'espacement, comme on le verra par la suite.

Parallèlement, comme dans le cas précédent, la cellule reçue est enregistrée dans un emplacement de la mémoire de cellules MT, à l'adresse FFL+1.

Toutes les cellules reçues sont enregistrées de cette façon. Une première cellule d'un circuit virtuel, qui se présente alors que la mémoire tampon de ce circuit virtuel est vide, est chaînée comme on vient de la voir. Des cellules suivantes, qui se présentent alors que la mémoire tampon n'est plus vide, ne sont pas chaînées de cette façon ; elles le sont plus tard et d'une manière différente, comme on va le voir maintenant, dans la description du processus d'émission.

Lorsqu'une cellule doit être émise sur la voie sortante, mte, la logique d'émission LE s'adresse au dispositif MC.

A partir du numéro ntc fourni par le compteur CTC, le dispositif MC lit la table FAVR. L'indication FVF désigne un circuit virtuel dont la mémoire tampon contient une cellule à émettre. Pour y accéder, l'indication FVF est utilisée pour adresser la table de début de tampon FCVF, laquelle fournit alors une indication FFF qui est l'adresse de l'emplacement de mémoire, dans la mémoire tampon dévolue à ce circuit virtuel, contenant la cellule à émettre. Cette adresse est fournie à la logique d'émission LE, par la liaison LLE et sert à la lecture et à la transmission de la cellule. De plus, la table FCVR est également lue et l'indication FFB est décrémentée ; elle peut alors devenir égale à zéro et provoquer le chaînage du circuit virtuel par les tables FAVE et FCVN, à l'arrivée d'une cellule ultérieure, comme décrit précédemment. Par ailleurs, l'adresse FFF est incrémentée (modulo l'extension de la mémoire tampon du circuit virtuel, à l'aide du dispositif GMT consulté par la liaison LLG)), ce qui fournit une indication FFF+1 que est enregistrée dans la table de début de tampon FCVF, comme nouvelle indication FFF.

Par ailleurs, la même indication FVF sert à adresser la table de chaînage FCVN. Cette table fournit, à l'adresse indiquée, l'identité d'un circuit virtuel suivant, dans la file d'attente d'émission, FFN, laquelle est alors inscrite dans la table FAVR, comme nouvelle indication FVF, en vue de la transmission de la cellule suivante. La combinaison des tables FAVR et FCVN fournit ainsi la liste des circuits virtuels devant fournir les cellules à émettre, dans l'ordre. S'il advient qu'elle soit vide, des moyens simples pourvoiront à la transmission de cellules vides. On ne les décrira pas plus avant.

D'autre part, le dispositif MC adresse la table de files d'attente FAVE, à partir du numéro ntc, pour y lire l'identité FAF qui constitue le début de la file d'attente des circuits virtuels associés au temps cellule considéré et l'identité FAL qui en est la fin, à moins que le bit FAV n'indique que la file d'attente est vide. De plus, l'identité FVL tirée de la table FAVR est utilisée pour adresser la table FCVN. A l'adresse en question de la table FCVN est inscrite l'identité FAF, tandis que l'identité FAL est inscrite dans la table FAVR, comme nouvelle indication FVL, et que le bit FAV est commuté, dans l'emplacement que l'on vient de lire de la table FAVE, pour indique que la file d'attente est vide. Cela réalise le chaînage de la totalité de la file d'attente associée au temps cellule considéré, dans la file d'attente des circuits virtuels ayant des cellules à émettre. Il est à noter que l'on peut également procéder à un tel chaînage avant d'exploiter la file d'attente émission pour effectuer l'émission d'une cellule sortante.

Bien entendu, si le bit FAV initialement lu dans la table FAVE indiquait que la file d'attente du temps cellule considéré était vide, les opérations de chaînage dans la file d'attente émission que l'on vient de décrire sont omises.

Il reste enfin, puisque l'on vient de mettre une cellule d'un circuit virtuel en émission, à initialiser l'émission d'une cellule suivante éventuelle de ce même circuit virtuel. Pour cela, il convient, partant de l'identité de ce circuit virtuel FVF, fournie par la table FAVR, d'interroger la table d'occupation de tampon FCVR et la table de vitesses FCVV. La première fournit une indication sur le nombre de cellules en attente dans la mémoire tampon du circuit virtuel. Plus ce nombre est élevé, plus la vitesse d'émission des cellules du circuit virtuel doit être élevée, c'est-à-dire plus l'intervalle entre elles doit être réduit. A titre d'exemple, la table FCVV fournit deux indications indv1 et indv2, chacune associée à un niveau d'occupation de la mémoire tampon du circuit virtuel. Ces indications peuvent être le nombre de temps cellules qui doivent s'écouler avant la mise en émission de la cellule suivante du circuit virtuel. Si l'occupation est faible (FFB inférieure à un seuil fixe égal par exemple à la moitié de la contenance d'une mémoire tampon), alors c'est l'indication indv1 qui s'applique. Le dispositif MC effectue la somme ntc+indv1 et s'en sert pour adresser la table FAVE. L'identité FAL du dernier circuit virtuel associé à ce temps cellule est utilisée pour adresser la table FCVN et y inscrire, à cette adresse, l'identité du circuit virtuel considéré, FAF, lue dans la table FAVE à l'adresse ntc. Cette dernière identité est alors inscrite dans la table FAVE, à l'adresse ntc+indv1, comme nouvelle adresse FAL, tandis que le bit FAV, à la même adresse est commuté, si nécessaire, pour indiquer que la file d'attente n'est pas vide. Ces opérations réalisent le chaînage du circuit virtuel au temps cellule ntc+indv1. Bien entendu, si l'occupation de la mémoire tampon du circuit virtuel est plus élevée, l'indication indv2 peut s'appliquer et causer le chaînage de ce circuit virtuel l'associant à un temps cellule ntc+indv2 plus proche, et ainsi de suite. En outre, les intervalles entre cellules spécifiés par les indications indv1, indv2, etc., tiendront compte de la vitesse de transmission du circuit virtuel. On remarquera que cet intervalle est au plus égal à N, ce qui n'est pas gênant, même pour les circuits virtuels à débit faible.

Une disposition additionnelle du dispositif de régulation de l'invention, tel qu'il vient d'être décrit, est représentée en pointillés à la figure 2. Il s'agit d'une table FCVC ayant un emplacement par circuit virtuel contenant au moins une indication de comptage telle que CPT1, CPT2... Cette mémoire est adressée à l'émission d'une cellule, par l'indication FVF fournie par la file d'attente d'émission (table FAVR). L'indication de comptage CPT1 est décrémentée, ou incrémentée, en fonction du nombre de cellules en attente dans mémoire tampon du circuit virtuel, indiquée par l'indication FFB de la table FCVR. Le compteur CPT1 est ainsi décrémenté (jusqu'à zéro seulement) si le degré d'occupation de la mémoire tampon est faible et se traduit, par exemple, par l'utilisation de l'indication d'espacement indv1. Il est incrémenté si ce degré d'occupation est plus élevé. D'autres indications de comptage semblables peuvent être associés à des limites de degré d'occupation plus élevées. Chaque indication de comptage additionnelle aura une capacité réduite par rapport aux précédentes. Ces différentes indications de comptage évalueront ainsi chacune une moyenne de présence du débit du circuit entrant à un niveau donné, l'ensemble de ces indications de comptage définissant un gabarit débit-temps. Si le débit du circuit virtuel reste trop longtemps à un niveau donné, l'indication de comptage correspondant atteindra son maximum. Il est alors aisé, de limiter autoritairement le temps durant lequel le débit pourra, en moyenne, rester à tout niveau donné en définissant en conséquence la capacité de comptage de l'indication de comptage correspondante et en prévoyant que, lorsque l'indication de comptage de ce niveau atteint son maximum, au lieu d'appliquer l'indication d'espacement qui s'applique normalement pour ce niveau, indv2 par exemple, on choisira à la place une indication d'espacement aboutissant à un débit de sortie plus faible, indv1 par exemple. Le résultat en sera une augmentation rapide de l'occupation de la mémoire tampon, si le débit d'entrée ne se réduit pas et, en conséquence, le refus ultérieur de cellules surnuméraires.

Pour résumer, chaque cellule entrante est enregistrée dans la mémoire tampon du circuit virtuel auquel elle appartient. Les cellules sortantes sont émises dans des temps cellule qui sont cycliquement numérotés. Une file d'attente de temps cellule est associée à chaque temps cellule. Une file d'attente d'émission est associée à la voie sortante. Elle est alimentée par les files d'attente de temps cellule.

Une première cellule entrante d'un circuit virtuel donnée donne d'abord lieu à inscription du circuit virtuel dans la file d'attente d'un temps cellule suivant celui dans lequel elle arrive. Lorsque ce temps cellule est atteint, la file d'attente de temps cellule correspondante est incorporée à la fin de la file d'attente d'émission. Lorsque vient son tour dans la file d'attente d'émission, le circuit virtuel fournit la cellule considérée qui est émise comme cellule sortante.

Si les débits des circuits virtuels sont faibles, chaque cellule est retransmise avant qu'une cellule suivante se présente, de sorte que toutes les cellules sont traitées comme on vient de le voir et que les cellules entrantes sont retransmises dans l'ordre où elles se présentent.

Dès qu'une cellule se présente avant que la précédente ait été retransmise, cette deuxième cellule est simplement enregistrée en mémoire tampon. Lorsque la première cellule est retransmise, la présence d'une deuxième cellule donne lieu à inscription du circuit virtuel dans une file d'attente d'un temps cellule à venir déterminé à partir d'une indication de vitesse propre au circuit virtuel. La deuxième cellule sera ainsi retransmise avec un espacement minimal déterminé par rapport à la première. Il en sera éventuellement de même de cellules suivantes, jusqu'à ce que l'on revienne au traitement initialement résumé. Le système décrit, en imposant un espacement minimal tend ainsi à régulariser le débit du circuit virtuel, éliminant des pointes de débit excessives. On remarquera que l'on peut de façon simple, donner aux cellules émises un espacement moyen défini et non pas un espacement minimal. Il suffit de déterminer le temps cellule auquel un circuit virtuel est associé pour l'émission d'une cellule suivante, au moment de l'émission d'une cellule courante, non pas par une expression telle que ntc+indv1 ou ntc+indv2, comme indiqué plus haut, dans laquelle ntc désigne le temps cellule courant, mais par une expression telle que NTC(i+1) = NTCi+indv1 ou NTCi+indv2, dans laquelle NTCi est le temps cellule auquel la cellule courante avait été précédemment associée. Pour cela, il suffit de conserver l'information NTCi dans une table additionnelle semblable à la table FCVF et de la lire au moment de calculer NTC(i+1). Ainsi, les cellules consécutives d'un même circuit virtuel seraient affectées à des temps cellule régulièrement espacés de indv1 ou indv2 et seraient donc émises avec un espacement réel basé en moyenne sur un tel espacement régulier et affecté seulement par les inégalités des files d'attente des temps cellule. Bien entendu, l'expression de NTC(i+1) indiquée plus haut n'est applicable que tant qu'elle fournit une valeur désignant un temps cellule postérieur au temps cellule courant ntc. Pour cette raison, on peut prévoir des moyens de correction de la valeur NTC(i+1) tels qu'il en soit ainsi dans tous les cas.

Il est à noter, incidemment, que la mémoire tampon d'un circuit virtuel peut être assez grande pour n'être pratiquement jamais pleine, en particulier grâce à l'emploi d'un dispositif de gestion dynamique de mémoire GMT. Il peut aussi être prévu que, si ce stade est atteint, toute cellule surnuméraire est tout simplement ignorée. On peut y parvenir aisément, par exemple, en décelant que l'indication FFL+1 est égale à l'indication FFF et en interdisant alors l'opération d'inscription qui causerait un écrasement de données dans la mémoire tampon de circuit virtuel correspondante.

Par ailleurs, la détermination du temps cellule à laquelle est affectée la deuxième cellule évoquée ci-dessus tiendra compte aussi du débit du circuit virtuel exprimé, par exemple, du degré d'occupation de la mémoire tampon du circuit virtuel. Si ce degré d'occupation est stable, cela revient à tenir compte du débit entrant. L'accroissement du débit entrant se traduit par un accroissement limité du débit sortant. Ce système tend ainsi à maintenir la régularisation de débit même en présence de fortes pointes de débit. Le fait d'avoir choisi le degré d'occupation de la mémoire tampon comme mesure du débit est une simple commodité, le débit pouvant être évalué de bien d'autres manières.

La logique de réception LR, la logique d'émission LE, le dispositif de gestion de mémoire GMT et le dispositif de commande MC sont essentiellement des dispositifs de traitement de données à caractère logique. Il n'est pas nécessaire d'en donner une description détaillée. Dans l'état actuel de la technique, leur réalisation ne pose aucune difficulté au spécialiste ; elle sera basée sur l'emploi de processeurs programmés ayant des performances adaptées aux durées disponibles pour accomplir les opérations énumérées, compte tenu du débit des liaisons multiplex. Selon les besoins, en termes de performances, un nombre plus ou moins grand de processeurs se partageant les opérations décrites peuvent être prévus. Par ailleurs, on peut concevoir un tel dispositif oeuvrant au profit de plusieurs voies entrantes et de plusieurs voies sortantes. On peut même envisager de l'associer ou de l'incorporer à un commutateur de voies à multiplexage temporel asynchrone.

De même, on n'a pas mentionné des opérations d'initialisation dont la nécessité a un caractère d'évidence et dont la réalisation appartient à la technique classique en ce domaine.

D'une manière générale, il est bien évident que les descriptions qui précèdent n'ont été données qu'à titre d'exemple non limitatif et que de nombreuses variantes peuvent être imaginées, sans sortir pour autant du cadre de l'invention.

## Revendications

1. Dispositif de régularisation de débit de circuits virtuels empruntant une voie de transmission à multiplexage temporel asynchrone dans lequel les cellules entrantes d'une voie à multiplexage temporel asynchrone d'entrée (mtr), comportant une en-tête contenant une information de destination qui peut être traitée comme une identité de circuit virtuel, sont aiguillées vers une mémoire de cellules (MT) comprenant une pluralité de mémoires tampons de circuits virtuels (MA1, MA2..., MAn), chaque cellule étant rangée dans la mémoire tampon de circuit virtuel associée au circuit virtuel auquel cette cellule appartient, et les cellules sortantes d'une voie à multiplexage temporel asynchrone de sortie (mte) sont lues dans ces mêmes mémoires tampons de circuits virtuels (MA1, MA2..., MAn), caractérisé en ce qu'il comprend des moyens de commande (MC) recevant une identité de circuit virtuel (NCV) extraite de chacune desdites cellules entrantes et associant entre elles les identités de circuit virtuel des cellules entrantes successives de manière à déterminer l'ordre dans lequel ces mêmes cellules sont ensuite lues dans lesdites mémoires tampon de circuits virtuels (MA1, MA2..., MAn) pour être retransmises en tant que cellules sortantes, ces moyens de commande adaptant ledit ordre en fonction d'informations (FCVV) propre à chaque circuit virtuel, de manière que des cellules entrantes successives d'un même circuit virtuel, issues d'une même mémoire tampon de circuit virtuel, soient espacées en moyenne au moins d'un intervalle déterminé pour ce circuit virtuel, réduisant ainsi le débit instantané du circuit virtuel sans perte de cellule.

2. Dispositif de régularisation de débit conforme à la revendication 1, caractérisé en ce que des temps cellule, correspondant aux intervalles de temps successifs durant lesquels sont envoyées les cellules sortantes sur la vote de transmission à multiplexage temporel asynchrone de sortie, sont numérotés cycliquement (ntc) et une file d'attente de temps cellule (FAVE, FCVN) est affectée à chacun de tels temps cellule portant un numéro distinct, l'envoi de cellules consécutives d'un même circuit virtuel en respectant ledit intervalle déterminé étant obtenu en inscrivant une indication (FAF, FAL, FFN) identifiant ce circuit virtuel dans des files d'attente de temps cellule espacés au moins dudit intervalle déterminé, tandis que, à chaque temps cellule identifié par son numero, le contenu de la file d'attente du temps cellule correspondant à ce numéro est transféré dans une file d'attente d'émission (FAVR, FCVN), chaque indication de circuit virtuel (FVF, FVL, FFN) de la file d'attente d'émission étant utilisée à son tour pour aller lire, dans la mémoire tampon du circuit virtuel auquel elle appartient, une cellule qui est transmise sur la voie de transmission à multiplexage temporel asynchrone de sortie (mte).

3. Dispositif de régularisation de débit conforme à la revendication 2, caractérisé en ce que, à l'émission d'une cellule sortante, et si la mémoire tampon du circuit virtuel auquel elle appartient en contient au moins une autre, l'indication identifiant ce circuit virtuel est inscrite dans une file d'attente de temps cellule (FAVE, FCVN) qui est sélectionnée, en tenant compte d'une indication de vitesse attachée (FCVV, indv1) au circuit virtuel auquel appartient ladite cellule sortante, de manière que soit obtenu ledit intervalle déterminé.

4. Dispositif de régularisation de débit conforme à la revendication 3, caractérisé en ce que, à l'émission d'une cellule sortante, et si la mémoire tampon du circuit virtuel auquel elle appartient en contient au moins une autre, l'indication identifiant ce circuit virtuel est inscrite dans une file d'attente de temps cellule (FAVE, FCVN) qui est sélectionnée, en tenant compte d'une indication de vitesse (FCVV, indv1, indv2) attachée au circuit virtuel auquel appartient ladite cellule sortante et d'une donnée (FCVR, FFB) dépendant du débit observé de ce circuit virtuel.

5. Dispositif de régularisation de débit conforme à la revendication 3 ou 4, caractérisé en ce que, à la réception d'une cellule entrante et si la mémoire tampon du circuit virtuel auquel appartient cette cellule entrante n'en contient aucune autre, l'indication identifiant ce circuit virtuel est inscrite dans une file d'attente de temps cellule (FAVE, FCVN) qui est déterminée à partir du temps cellule en cours.

6. Dispositif de régularisation de débit conforme à la revendication 3, 4 ou 5, caractérisé en ce que, à la réception d'une cellule entrante et si la mémoire tampon du circuit virtuel auquel appartient cette cellule entrante n'en contient aucune autre, l'indication identifiant ce circuit virtuel est inscrite dans une file d'attente de temps cellule (FAVE, FCVN) qui est déterminée à partir du temps cellule en cours et d'une indication de vitesse (indv1) attachée au circuit virtuel considéré.

7. Dispositif de régularisation de débit conforme à la revendication 4, 5 ou 6, caractérisé en ce que ladite donnée dépendant du débit (FFB) est une mesure du degré d'occupation de la mémoire tampon du circuit virtuel de la cellule considérée.

8. Dispositif de régularisation de débit conforme à la revendication 7, caractérisé en ce que, pour un degré de remplissage au moins de la mémoire tampon d'un circuit virtuel, il est prévu une indication de comptage (CPT1, CPT2) qui est incrémentée à l'émission de chaque cellule appartenant à ce circuit virtuel, lorsque ledit degré d'occupation est dépassé, et décrémenté, s'il n'est pas atteint, ladite indication de comptage (CPT1, CPT2) ayant une valeur maximale, atteinte en cas de dépassements majoritaires dudit degré d'occupation, qui cause alors la mise en oeuvre d'une indication de vitesse (indv1) correspondant à une espacement plus grand des cellules de ce circuit virtuel en sortie du dispositif de régularisation de débit.

9. Dispositif de régularisation de débit conforme à l'une quelconque des revendications 3 à 8, caractérisé en ce que, à l'émission d'une cellule sortante, et si la mémoire tampon du circuit virtuel auquel elle appartient en contient au moins une autre, l'indication identifiant ce circuit virtuel est inscrite dans une file d'attente de temps cellule (FAVE, FCVN) qui est sélectionnée, à partir du temps cellule en cours (ntc).

10. Dispositif de régularisation de débit conforme à l'une quelconque des revendications 3 à 8, caractérisé en ce que, à l'émission d'une cellule sortante, et si la mémoire tampon du circuit virtuel auquel elle appartient en contient au moins une autre, l'indication identifiant ce circuit virtuel est inscrite dans une file d'attente de temps cellule (FAVE, FCVN) qui est sélectionnée, à partir du temps cellule auquel la cellule sortante émise avait précédemment été affectée, dont l'identité avait été enregistrée à cet effet.

## Patentansprüche

1. Vorrichtung zur Regularisierung des Durchsatzes von virtuellen Schaltkreisen, die einen Übertragungskanal mit asynchroner Zeitmultiplexierung durchlaufen, wobei die ankommenden Zellen eines Eingangskanals (mtr) mit asynchroner Zeitmultiplexierung, deren Vorspann eine Zielinformation enthält, die als eine Identität des virtuellen Schaltkreises behandelt werden kann, in einen Zellenspeicher (MT) gelenkt werden, der zahlreiche Pufferspeicher für virtuelle Schaltkreise (MA1, MA2, ... MAn) enthält, wobei jede Zelle in den dem virtuellen Schaltkreis, zu dem diese Zelle gehört, zugeordneten Pufferspeicher eingetragen wird und die ausgehenden Zellen eines Ausgangskanals (mte) mit asynchroner Zeitmultiplexierung aus diesen Pufferspeichern (MA1, MA2, .. MAn) ausgelesen werden, dadurch gekennzeichnet, daß die Vorrichtung Steuermittel (MC) enthält, die eine Identität (NCV) eines virtuellen Schaltkreises empfangen, die aus jeder der ankommenden Zellen entnommen wird und die Identitäten eines virtuellen Schaltkreises von aufeinanderfolgenden ankommenden Zellen einander zuordnen, so daß die Reihenfolge bestimmt wird, in der diese gleichen Zellen dann aus dem Pufferspeicher für virtuelle Schaltkreise (MA1, MA2,. .. MAn) ausgelesen und als ausgehende Zellen weiterübertragen werden, wobei diese Steuermittel die Reihenfolge abhängig von Informationen (FCVV) anpassen, die zu jedem virtuellen Schaltkreis gehören, so daß aufeinanderfolgende ankommende Zellen eines gegebenen virtuellen Schaltkreises, die aus einem gleichen Pufferspeicher eines virtuellen Schaltkreises stammen, im Mittel mindestens einen Abstand besitzen, der für diesen virtuellen Schaltkreis bestimmt ist, so daß der augenblickliche Durchsatz des virtuellen Schaltkreises ohne Zellenverlust verringert wird.

2. Vorrichtung zur Regularisierung des Durchsatzes nach Anspruch 1, dadurch gekennzeichnet, daß Zellentakte entsprechend den aufeinanderfolgenden Zeitintervallen, während denen die ausgehenden Zellen auf den Ausgangskanal mit asynchroner Zeitmultiplexierung ausgesendet werden, zyklisch numeriert sind (ntc) und daß eine Zellentakt-Warteschlange (FAVE, FCVN) jedem solchen Zellentakt mit einer anderen Nummer zugeordnet ist, wobei die Aussendung von aufeinanderfolgenden Zellen eines gegebenen virtuellen Schaltkreises unter Beachtung des vorbestimmten Intervalls erhalten wird, indem eine Angabe (FAF, FAL, FFN) zur Identifizierung dieses virtuellen Schaltkreises in Zellentakt-Warteschlangen, die für mindestens einen Abstand gemäß dem bestimmten Intervall besitzen, eingetragen wird, während mit jedem durch seine Nummer identifizierten Zellentakt der Inhalt der dieser Nummer entsprechenden Zellentakt-Warteschlange in eine Sendewarteschlange (FAVR, FCVN) übertragen wird und jede Angabe eines virtuellen Schaltkreises (FVF, FVL, FFN) der Sendewarteschlange der Reihe nach verwendet wird, um aus dem Pufferspeicher des virtuellen Schaltkreises, zu dem sie gehört, eine Zelle auszulesen, die auf den Ausgangsübertragungskanal (mte) mit asynchroner Zeitmultiplexierung ausgesendet wird.

3. Vorrichtung zur Regularisierung des Durchsatzes nach Anspruch 2, dadurch gekennzeichnet, daß beim Aussenden einer ausgehenden Zelle, wenn der Pufferspeicher des virtuellen Schaltkreises, zu dem die Zelle gehört, mindestens eine weitere Zelle enthält, die diesen virtuellen Schaltkreis identifizierende Angabe in eine Zellentakt-Warteschlange (FAVE, FCVN) eingetragen wird, die unter Berücksichtigung einer dem virtuellen Schaltkreis, zu dem die ausgehende Zelle gehört, zugeordneten Geschwindigkeitsangabe (FCVV, indv1) ausgewählt wird, so da sich das bestimmte Intervall ergibt.

4. Vorrichtung zur Regularisierung des Durchsatzes nach Anspruch 3, dadurch gekennzeichnet, daß beim Aussenden einer ausgehenden Zelle, wenn der Pufferspeicher des virtuellen Schaltkreises, zu dem die Zelle gehört, mindestens eine weitere Zelle enthält, die diesen virtuellen Schaltkreis identifizierende Angabe in eine Zellentakt-Warteschlange (FAVE, FCVN) eingetragen wird, die unter Berücksichtigung einer Geschwindigkeitsangabe (FCVV, indv1, indv2) ausgewählt wird, welche dem virtuellen Schaltkreis zugewiesen ist, zu dem die ausgehende Zelle gehört, sowie unter Berücksichtigung einer Angabe (FCVR, FFB), die vom für diesen virtuellen Schaltkreis beobachteten Durchsatz abhängt.

5. Vorrichtung zur Regularisierung des Durchsatzes nach Anspruch 3 oder 4, dadurch gekennzeichnet, daß beim Empfang einer ankommenden Zelle, wenn der Pufferspeicher des virtuellen Schaltkreises, zu dem diese ankommende Zelle gehört, keine weitere Zelle enthält, die diesen virtuellen Schaltkreis identifizierende Angabe in eine Zellentakt-Warteschlange (FAVE, FCVN) eingetragen wird, die ausgehend vom laufenden Zellentakt bestimmt wird.

6. Vorrichtung zur Regularisierung des Durchsatzes nach Anspruch 3, 4 oder 5, dadurch gekennzeichnet, daß beim Empfang einer ankommenden Zelle, wenn der Pufferspeicher des virtuellen Schaltkreises, zu dem diese ankommende Zelle gehört, keine weitere Zelle enthält, die diesen virtuellen Schaltkreis identifizierende Angabe in eine Zellentakt-Warteschlange (FAVE, FCVN) eingetragen wird, die aufgrund des laufenden Zellentakts und einer Geschwindigkeitsangabe (indvl) bestimmt wird, die zum betreffenden virtuellen Schaltkreis gehört.

7. Vorrichtung zur Regularisierung des Durchsatzes nach Anspruch 4, 5 oder 6, dadurch gekennzeichnet, daß die vom Durchsatz abhängige Angabe (FFB) ein Maß für den Belegungsgrad des Pufferspeichers des virtuellen Schaltkreises der betreffenden Zelle ist.

8. Vorrichtung zur Regularisierung des Durchsatzes nach Anspruch 7, dadurch gekennzeichnet, daß für einen Belegungsgrad mindestens des Pufferspeichers eines virtuellen Schaltkreises eine Zählangabe (CPT1, CPT2) vorgesehen ist, die beim Aussenden jeder zu diesem virtuellen Schaltkreis gehörenden Zelle inkrementiert wird, wenn der Belegungsgrad überschritten wird, und rückwärtsgezählt wird, wenn er nicht erreicht wird, wobei die Zählangabe (CPT1, CPT2) einen Maximalwert hat, der bei mehrfachem Überschreiten des Belegungsgrads erreicht wird und dann eine Geschwindigkeitsangabe (indvl) entsprechend einem größeren Abstand der Zellen dieses virtuellen Schaltkreises am Ausgang der Durchsatzregularisierungsvorrichtung wirksam werden läßt.

9. Vorrichtung zur Regularisierung des Durchsatzes nach einem beliebigen der Ansprüche 3 bis 8, dadurch gekennzeichnet, daß beim Aussenden einer ausgehenden Zelle, wenn der Pufferspeicher des virtuellen Schaltkreises, zu dem die Zelle gehört, mindestens eine weitere Zelle enthält, die Angabe, die diesen virtuellen Schaltkreis identifiziert, in eine Zellentakt-Warteschlange (FAVE, FCVN) eingetragen wird, die aufgrund des laufenden Zellentakts (ntc) ausgewählt wird.

10. Vorrichtung zur Regularisierung des Durchsatzes nach einem beliebigen der Ansprüche 3 bis 8, dadurch gekennzeichnet, daß beim Aussenden einer ausgehenden Zelle, wenn der Pufferspeicher des virtuellen Schaltkreises, zu dem sie gehört, mindestens eine weitere Zelle enthält, die Angabe, die diesen virtuellen Schaltkreis identifiziert, in eine Zellentakt-Warteschlange (FAVE, FCVN) eingetragen wird, die aufgrund des Zellentakts ausgewählt wird, zu dem die ausgehende Zelle vorher gehört hat und deren Identität hierzu gespeichert worden war.

## Claims

1. A device for regularizing the throughput of virtual circuits using an asynchronous time-division multiplex transmission channel in which the incoming packets of an incoming asynchronous time-division multiplex channel (mtr), including a header containing destination information that can be treated as a virtual circuit identifier, are routed to a packet memory (MT) comprising a plurality of virtual circuit buffer memories (MA1, MA2, ..., MAn), each packet being stored in the virtual circuit buffer memory associated with the virtual circuit to which that packet belongs, and the outgoing packets of an output asynchronous time-division multiplex channel (mte) are read in the same virtual circuit buffer memories (MA1, MA2, ..., MAn), characterized in that it includes control means (MC) receiving a virtual circuit identifier (NCV) extracted from each of said incoming packets and associating with each other the virtual circuit identifiers of the successive incoming packets in order to determine the order in which said packets are thereafter read in said virtual circuit buffer memories (MA1, MA2, ..., MAn), to be forwarded as outgoing packets, said control means adapting said order in accordance with information (FCVV) specific to each virtual circuit, so that successive incoming packets from the same virtual circuit buffer memory are spaced on average by at least a particular interval for that virtual circuit, so reducing the instantaneous throughput of the virtual circuit without losing packets.

2. A throughput regularization device according to claim 1 characterized in that packet times corresponding to successive time intervals during which the outgoing packets are sent over the output asynchronous time-division multiplex transmission channel are numbered cyclically (ntc) and a packet time queue (FAVE, FCVN) is assigned to each of said packet times carrying a separate number, the sending of consecutive packets of the same virtual circuit conforming to said particular interval being achieved by writing a flag (FAF, FAL, FFN) identifying that virtual circuit into packet time queues spaced by at least said particular interval, whereas, in each packet time identified by its number, the content of the packet time queue corresponding to that number is transferred into a send queue (FAVR, FCVN), each virtual circuit flag (FVF, FVL, FFN) of the send queue being used in turn to read in the buffer memory of the virtual circuit to which it belongs a packet that is transmitted over the outgoing asynchronous time-division multiplex transmission channel (mte).

3. A throughput regularization device according to claim 2 characterized in that, on sending an outgoing packet, and if the buffer memory of the virtual circuit to which it belongs contains at least one other, the flag identifying that virtual circuit is written into a packet time queue (FAVE, FCVN) which is selected, allowing for a speed flag (FCVV, indvl) attached to the virtual circuit to which said outgoing packet belongs, so that said particular interval is obtained.

4. A throughput regularization device according to claim 3 characterized in that, on sending an outgoing packet, and if the buffer memory of the virtual circuit to which it belongs contains at least one other, the flag identifying that virtual circuit is written into a packet time queue (FAVE, FCVN) which is selected, allowing for a speed flag (FCVV, indv1, indv2) attached to the virtual circuit to which said outgoing packet belongs and data (FCVR, FFB) dependent on the observed throughput of that virtual circuit.

5. A throughput regularization device according to claim 3 or claim 4 characterized in that, on receiving an incoming packet and if the buffer memory of the virtual circuit to which that incoming packet belongs does not contain another one, the flag identifying that virtual circuit is written into a packet time queue (FAVE, FCVN) that is determined on the basis of the current packet time.

6. A throughput regularization device according to any one of claims to 5 characterized in that, on receiving an incoming packet and if the buffer memory of the virtual circuit to which that incoming packet belongs does not contain another one, the flag identifying that virtual circuit is written into a packet time queue (FAVE, FCVN) that is determined on the basis of the current packet time and a speed flag (indv1) attached to the virtual circuit in question.

7. A throughput regularization device according to any one of claims 4 to 6 characterized in that said throughput dependent data (FFB) is a measure of the degree of filling of the buffer memory of the virtual circuit of the packet in question.

8. A throughput regularization device according to claim 7 characterized in that, for at least one degree of filling of the buffer memory of a virtual circuit, a count flag (CPT1, CPT2) is provided and is incremented on sending each packet belonging to that virtual circuit when said degree of filling is exceeded and decremented if it is not reached, said count flag (CPT1, CPT2) having a maximal value, reached if said degree of filling is exceeded more often than it is not exceeded, which then causes the application of a speed flag (indv1) corresponding to a greater spacing of the packets of that virtual circuit at the output of the throughput regularization device.

9. A throughput regularization device according to any one of claims 3 to 8 characterized in that, on sending an outgoing packet, and if the buffer memory of the virtual circuit to which it belongs contains at least one other one, the flag identifying that virtual circuit is written into a packet time queue (FAVE, FCVN) that is selected on the basis of the current packet time (ntc).

10. A throughput regularization device according to any one of claims 3 to 8 characterized in that, on sending an outgoing packet, and if the buffer memory of the virtual circuit to which it belongs contains at least one other, the flag identifying that virtual circuit is written in a packet time queue (FAVE, FCVN) that is selected on the basis of a packet time previously assigned to the outgoing packet sent, the identifier of the latter having been stored for this purpose.
